# EUROPÄISCHE PATENTSCHRIFT

(11) **EP 2 236 451 B1**
(45) Veröffentlichungstag und Bekanntmachung des Hinweises auf die Patenterteilung: **17.11.2010**
(21) Anmeldenummer: 09004680.6
(22) Anmeldetag: 31.03.2009
(51) Int. Cl.: B66F 9/07, B66F 9/14, B65G 1/04, B66F 9/19

(54) **Regalbediengerät für Langgutkassetten**
Shelf-serving device for long good cartridges
Appareil de commande d'étagère pour cassettes de marchandises longitudinales

(43) Veröffentlichungstag der Anmeldung: 06.10.2010
(73) Patentinhaber: Remmert GmbH & Co. KG, 32584 Löhne (DE)
(72) Erfinder: Dirk Kammel, 32657 Lemgo (DE)
(74) Vertreter: Philipp, Matthias

(56) Entgegenhaltungen:
- WO-A-2009/057166
- DD-A5- 262 221
- DE-A1- 4 204 358
- DE-A1-102005 039 466
- JP-A- 63 041 302

## Beschreibung

Die Erfindung betrifft ein Regalbediengerät für Kassetten, beispielsweise Langgutkassetten, mit mindestens einer horizontalen Kassettenaufnahme, die einen entlang einer horizontalen Führungsbahn mittels einer Antriebseinrichtung verfahrbaren Transportwagen mit einer Greifeinrichtung für jeweils mindestens eine Kassette aufweist.

Ein derartiges Regalbediengerät ist beispielsweise aus der DE 10 2005 039 466 A1 bekannt und hat sich in der Praxis durchaus bewährt. Bei diesem Stand der Technik weist die Greifeinrichtung zwei parallele, beabstandete, wechselweise zwischen einer Ruheposition und einer Mitnahmeposition mittels eines Kniehebels verschwenkbare Greifarme auf, wobei die Kniehebel mit einer fest an der Kassettenaufnahme angeordneten Bedieneinrichtung zu betätigen sind. Diese feste Anordnung ist bisweilen im Betrieb hinderlich.

JP63041302 offenbart ein Regalbediergerät mit einer Greifeinrichtung und einem um eine vertikale Drehachse drehbaren Greifkopf.

Die Aufgabe der Erfindung besteht darin, ein verbessertes Regalbediengerät vorzuschlagen, bei der die Greifeinrichtung unabhängig von der aktuellen Verfahrposition des Transportwagens in Ruheposition oder Greifposition gebracht werden kann, um eine flexiblere Arbeitsweise des Regalbediengeräts zu ermöglichen.

Diese Aufgabe wird erfindungsgemäß bei einem gattungsgemäßen Regalbediengerät gemäß Anspruch 1 durch die Maßnahme gelöst, dass die Greifeinrichtung einen zwischen einer ersten Ziehstellung und einer zweiten Ziehstellung um eine vertikale Drehachse drehbaren Greifkopf aufweist, der zwei mit gegenseitigem Abstand von der Drehachse angeordnete Greifelemente trägt, die unabhängig voneinander zwischen einer abgesenkten Ruheposition und einer angehobenen Greifposition verlagerbar sind.

Durch die Möglichkeit, die Greifelemente unabhängig voneinander anzuheben oder abzusenken, ergibt sich der große Vorteil gegenüber dem Stand der Technik, dass der gegenseitige Abstand der Greifelemente relativ klein ausgeführt sein kann und dass dennoch eine sichere Erfassung eines Mitnehmers einer ein- oder auszulagernden Kassette gewährleistet ist.

Es kann vorgesehen sein, dass mindestens ein Greifelement entlang einer vertikal oder schräg angeordneten Führung, die geradlinig oder kurvenförmig sein kann, verlagerbar ist.

Alternativ kann vorgesehen sein, dass mindestens ein Greifelement exzentrisch bezüglich einer horizontalen Schwenkachse gehalten und um diese verschwenkbar ist, so dass eine Verlagerung in vertikaler Richtung möglich ist. Hierbei ist bevorzugt vorgesehen, dass die Greifelemente um parallele Schwenkachsen verschwenkbar sind, wobei die Schwenkachsen konzentrisch oder mit gegenseitigem Abstand angeordnet sein können.

Bevorzugt ist vorgesehen, dass jedes Greifelement aus der Ruheposition um einen bestimmten Schwenkwinkel in die Greifposition verschwenkbar ist. Dieser Schwenkwinkel kann beispielsweise 30°, 40°, 50°, 60°, 70°, 80°, 90° oder mehr betragen.

In einer bevorzugten Weiterbildung ist vorgesehen, dass mindestens eines der Greifelemente mit einer Sollbruchstelle versehen ist, damit es bei einer Fehlbedienung nicht zu größeren Materialschäden kommen kann.

Zweckmäßigerweise ist jedes Greifelement von einem Servo- oder Schrittmotor elektrisch, hydraulisch oder pneumatisch gesteuert angetrieben;

In an sich bekannter Weise ist vorgesehen, dass der Transportwagen auf zwei parallelen, im Querschnitt C-förmigen Führungsschienen verfahrbar ist. Zweckmäßigerweise hat der Transportwagen vier Fahrrollen.

Die vertikale Drehachse kann mittig bezüglich des Transportwagens oder zwischen den Fahrschienen angeordnet sein, was in Bezug auf die Symmetrie der auftretenden Kräfte vorteilhaft ist. Andererseits ist es in Bezug auf einen konstruktiv möglichst großen Abstand der Greifelemente von der Drehachse vorteilhaft, wenn die vertikale Drehachse außermittig bezüglich des Transportwagens oder zwischen den Fahrschienen angeordnet ist, um eine größere Überbrückungsfahigkeit eines Abstands zwischen dem Mitnehmer einer zu verlagernden Kassette und dem Transportwagen zu ermöglichen.

Zweckmäßigerweise ist vorgesehen, dass die erste und die zweite Ziehstellung um 180° voneinander entfernt sind, d.h. einander in Bezug auf die Drehachse diametral gegenüberliegen.

Es ist vorteilhaft, wenn der Transportwagen durch zwei parallele, beabstandete Zugketten verfahrbar ist, wobei eine der Zugketten, die näher an der Drehachse angeordnet ist als die andere, eine größere Zugfestigkeit und geringere Belastungsdehnung aufweisen kann als die andere.

Die Erfindung bezieht sich ferner auf ein Regallager mit einem Regalbediengerät nach der Erfindung zum Ein- und Auslagern von Kassetten, insbesondere Langgutkassetten, wobei das Regallager an aufrechten Regalstützen in mehreren Etagen in regelmäßigen Abständen Regalfächer mit Auflagen für die Kassetten enthält, das Regalbediengerät stirnseitig horizontal und vertikal vor den Regalfächern verfahrbar ist und die Kassettenaufnahme in Erstreckungsrichtung der Kassetten gerichtet ist.

Die Erfindung betrifft ferner ein Verfahren zum Auslagern einer Kassette aus einem Regallager mit einem Regalbediengerät nach der Erfindung, mit den Schritten: Bewegen der Kassettenaufnahme stirnseitig vor ein Regalfach mit einer auszulagernden Kassette, Drehen des Greifkopfs in eine Ziehstellung, in der die Greifelemente der auszulagernden Kassette zugekehrt sind, bei in Ruhestellung befindlichen Greifelementen, Verfahren des Transportwagens an ein der Kassette benachbartes Ende der Kassettenaufnahme, bis sich ein erstes Greifelement, das weiter von der Drehachse entfernt ist als ein zweites Greifelement, hinter einem Kassettenmitnehmer befindet, Bewegen des ersten Greifelements in Greifposition, Zurückfahren des Transportwagens und Ziehen der Kassette in die Kassettenaufnahme des Regalbediengeräts.

Hierbei kann vorgesehen sein, dass das zweite Greifelement in Greifposition bewegt wird, nachdem das erste Greifelement gegen den Kassettenmitnehmer anliegt, um bei einem Verzögern der Fahrbewegung des Transportwagens ein unkontrolliertes Verrutschen der Kassette gegenüber dem Transportwagen zu vermeiden.

Die Erfindung betrifft weiterhin ein Verfahren zum Umlagern einer Kassette aus einem ersten Regalfach in ein zweites Regalfach eines Regallagers mit einem Regalbediengerät nach der Erfindung, mit den Schritten: a) Bewegen der Kassettenaufnahme stirnseitig vor das erste Kassettenfach, b) Drehen des Greifkopfs in eine Ziehstellung, in der die Greifelemente der umzulagernden Kassette zugekehrt sind, bei in Ruheposition befindlichen Greifelementen, c) Verfahren des Transportwagens bis an ein der Kassette benachbartes erstes Ende der Kassettenaufnahme, bis sich ein erstes Greifelement, das weiter von der Drehachse entfernt ist als ein zweites Greifelement, hinter einem ersten Kassettenmitnehmer befindet, d) Bewegen des ersten Greifelements in Greifposition, e) Zurückfahren des Transportwagens an ein entgegengesetztes Ende der Kassettenaufnahme und Ziehen der Kassette in die Kassettenaufnahme des Regalbediengeräts, f) Bewegen des ersten Greifelements in Ruheposition, Verschwenken des Greifkopfs in eine entgegengesetzte Ziehstellung und Verfahren des Transportwagens an das erste Ende der Kassettenaufnahme, g) Bewegen der Kassettenaufnahme stirnseitig vor das zweite Regalfach, h) Bewegen des zweiten Greifelements in Greifposition, Verfahren des Transportwagens an das entgegengesetzte Ende der Kassettenaufnahme und Schieben der Kassette in das zweite Regalfach.

Hierbei kann vorgesehen sein, dass in Schritt f) die Kassette mit in eine entgegengesetzte Ziehstellung gedrehtem Greifkopf um eine Strecke weiter in Richtung des entgegengesetzten Endes der Kassettenaufnahme gezogen wird, die etwa einem zweifachen Abstand der vertikalen Drehachse des Greifkopfs von der Mitte des Zwischenraums der Greifelemente entspricht, und erst dann das erste Greifelement in Ruheposition bewegt und der Transportwagen an das erste Ende der Kassettenaufnahme verfahren wird.

Die Erfindung wird nachfolgend anhand eines Ausführungsbeispiels erläutert, wobei auf eine Zeichnung Bezug genommen ist, in der
Fig. 1 eine Seitenansicht eines Regallagers für Langgutkassetten mit einem erfindungsgemäbein Regalbediengerät zeigt,
Fig. 2 eine schematische perspektivische Ansicht eines in einer horizontalen Führungsbahn einer Kassettenaufnahme des Regalbediengeräts verfahrbaren Transportwagens mit einem in einer ersten Ziehstellung befindlichen Greifkopf und zwei in Ruheposition befindlichen Greifelementen zeigt,
Fig. 3 den Transportwagen nach Fig. 2 mit in eine zweite Ziehstellung gedrehtem Greifkopf zeigt,
Fig. 4 den Transportwagen nach Fig. 2 mit in einer angehobenen Greifstellung befindlichen Greifelementen zeigt,
Fig. 5 den Transportwagen nach Fig. 4 mit in die zweite Ziehstellung gedrehtem Greifkopf zeigt,
Fig. 6 ein Verfahren zum Aus- und Umlagern einer Langgutkassette aus einem bzw. in ein Regallager erläutert, und
Fig. 7 ein anderes Verfahren zum Umlagern einer Langgutkassette in einem Regallager erläutert.

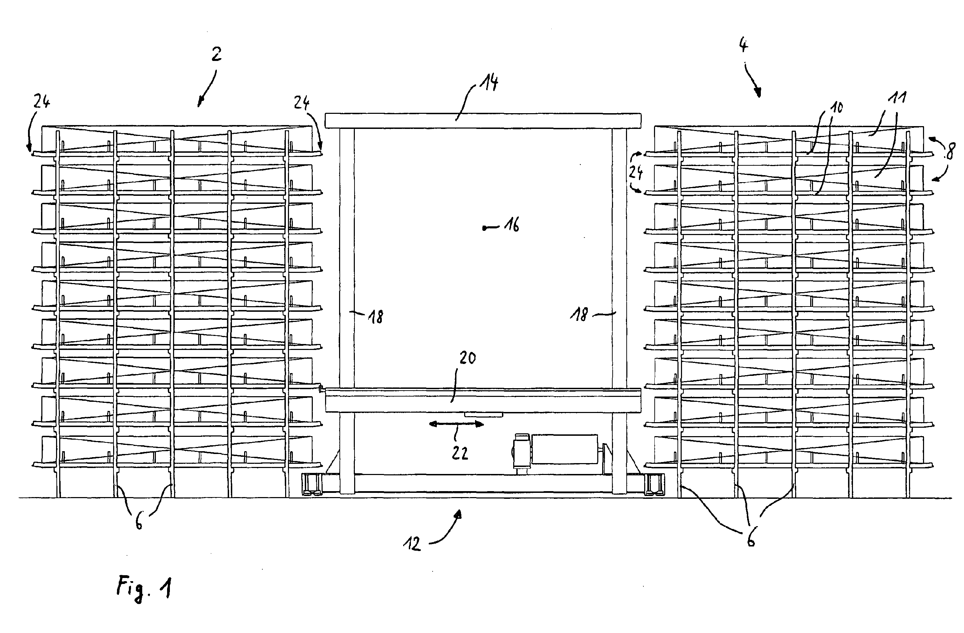

Das in Fig. 1 dargestellte Regallager besteht aus einem linken Regalbereich 2 und einem rechten Regalbereich 4, in denen jeweils eine große Anzahl von vertikalen Regalstützen 6 mit Abstand zueinander angeordnet sind, die eine Anzahl von horizontalen Etagen 8 bilden, in denen horizontal nebeneinander eine große Zahl von einzelnen Regalfächern gebildet sind, von denen jedes zur Aufnahme einer Langgutkassette 10 eingerichtet ist. In an sich bekannter Weise ist jedes Regalfach mit reibungs- und verschleißmindernden Beschichtungen versehen, damit eine Langgutkassette trotz des erheblichen Gewichts des darin aufgenommenen Materials (z.B.Stangen- oder Plattenmaterial) 11 möglichst leicht herausgezogen oder hineingeschoben werden kann.

In einer Regalgasse 12, die mittig zwischen den Regalbereichen 2, 4 gebildet ist, ist ein Regalbediengerät 14 auf Schienen in einer Gassenlängsrichtung 16 horizontal verfahrbar geführt. An dem Regalbediengerät ist an senkrechten Ständern 18 eine horizontal ausgerichtete Kassettenaufnahme 20 vertikal verfahrbar geführt. Die Kassettenaufnahme 20 kann von dem Regalbediengerät stirnseitig vor ein beliebiges Regalfach gefahren werden und dient entweder zur Aufnahme einer aus dem jeweiligen Regalfach auszulagernden Langgutkassette oder zur Einlagerung einer in der Kassettenaufnahme 20 zuvor aufgenommenen Langgutkassette in das betreffende Regalfach.

Zur Beschleunigung der Ein-, Aus- und Umlagervorgänge von Langgutkassetten ist die Kassettenaufnahme 20 zur Aufnahme von zwei Langgutkassetten nebeneinander ausgebildet, mit zwei im wesentlichen baugleichen, in Gassenlängsrichtung 16 hintereinander angeordneten Aufnahmekanälen, in denen jeweils ein Transportwagen auf einer horizontalen Führungsbahn verfahrbar ist, um eine aufgenommene Langgutkassette in ein Regalfach einzuschieben oder eine auszulagernde Langgutkassette aus einem Regalfach in den betreffenden Aufnahmekanal der Kassettenaufnahme zu ziehen.

In Fig. 1 sind diese Transportwagen nicht dargestellt. Lediglich am linken Rand der Kassettenaufnahme 20 ist ein aus dieser stirnseitig vorstehendes Ende eines Greifkopfs eines Transportwagens zu sehen, im Eingriff mit einem Kassettenmitnehmer 24, wie nachfolgend erläutert wird.

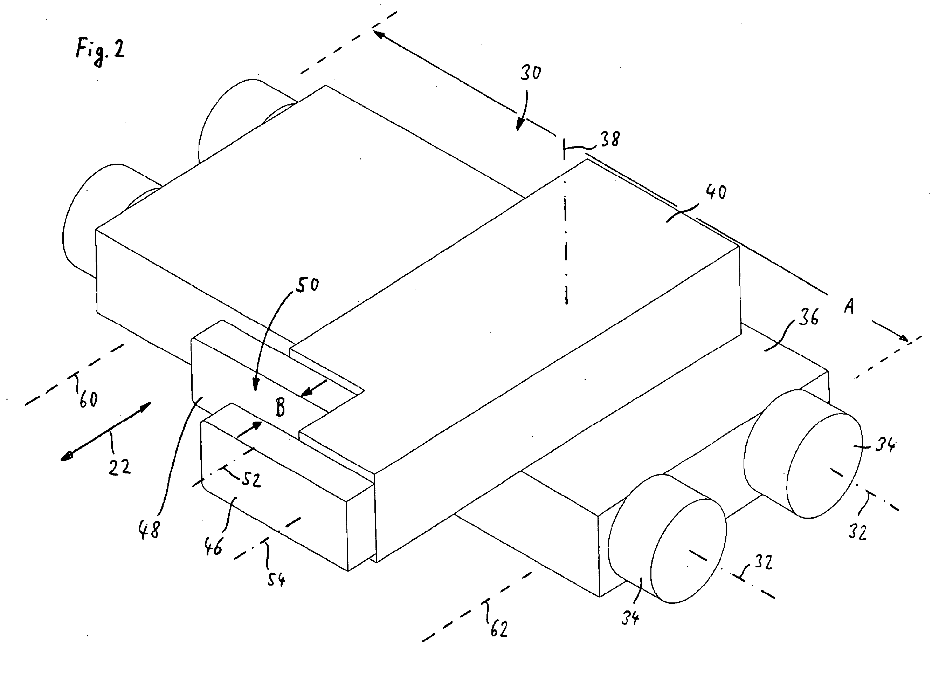

Fig. 2 bis 5 zeigen unterschiedliche schematische Darstellungen eines vorgenannten Transportwagens 30, der innerhalb einer Kassettenaufnahme 20 in deren Längsrichtung 22 auf vier um horizontale Drehachsen 32 drehbare Fahrrollen 34 verfahrbar ist. Die Fahrrollen 34 sind in an sich bekannter Weise in zwei horizontalen, einander mit Abstand gegenüberliegenden, im Querschnitt C-förmigen Fahrschienen geführt, in denen jeweils eine horizontale untere und eine mindestens um den Durchmesser der Fahrrollen beabstandete horizontale obere Fahrbahn gebildet ist. Diese Anordnung gewährleistet, dass der Transportwagen auch bei Auftreten von Kippmomenten, die um eine horizontale, parallel zu den Drehachsen 32 verlaufende Achse eingeleitet werden, sicher geführt ist

Der Transportwagen 30 kann grundsätzlich in beliebiger Weise in Längsrichtung 22 angetrieben sein, beispielsweise durch angetriebene Antriebsräder oder Fahrrollen, strangförmige, in Längsrichtung der Kassettenaufnahme 20 umlaufend angeordnete Zugmittel wie Ketten, Seile oder ähnliches oder durch eine sonstige Linearantriebstechnik. Im hier behandelten Ausführungsbeispiel ist der Transportwagen 30 von zwei parallelen, in Längsrichtung 22 der Kassettenaufnahme 20 umlaufend gerührten Antriebsketten 60, 62 verfahrbar, die mit Abstand voneinander und jeweils in der Nähe der Fahrrollen 34 mit einem Fahrgestell 36 des Transportwagens verbunden sind. Die Antriebsketten werden von einem gesteuerten Antrieb bewegt, mit dem eine ortsgenaue Positionierung des Transportwagens 30 entlang der Kassettenaufnahme 20 möglich ist.

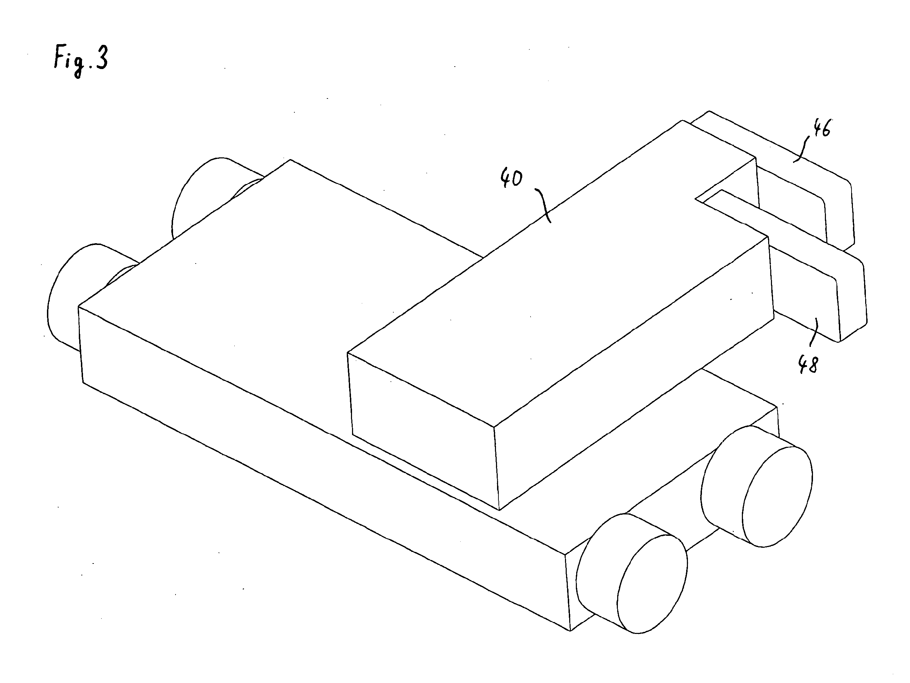

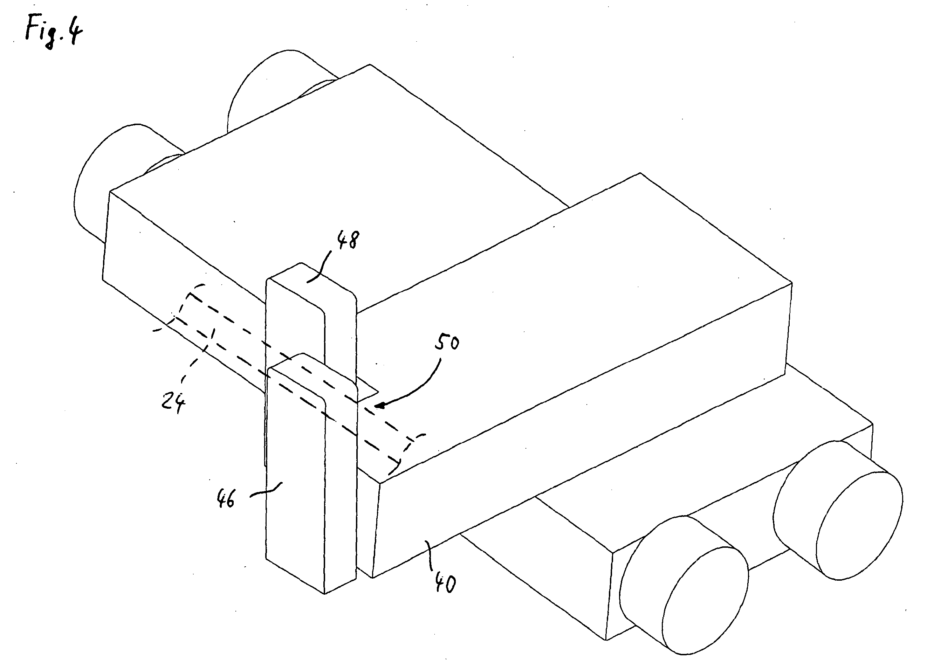

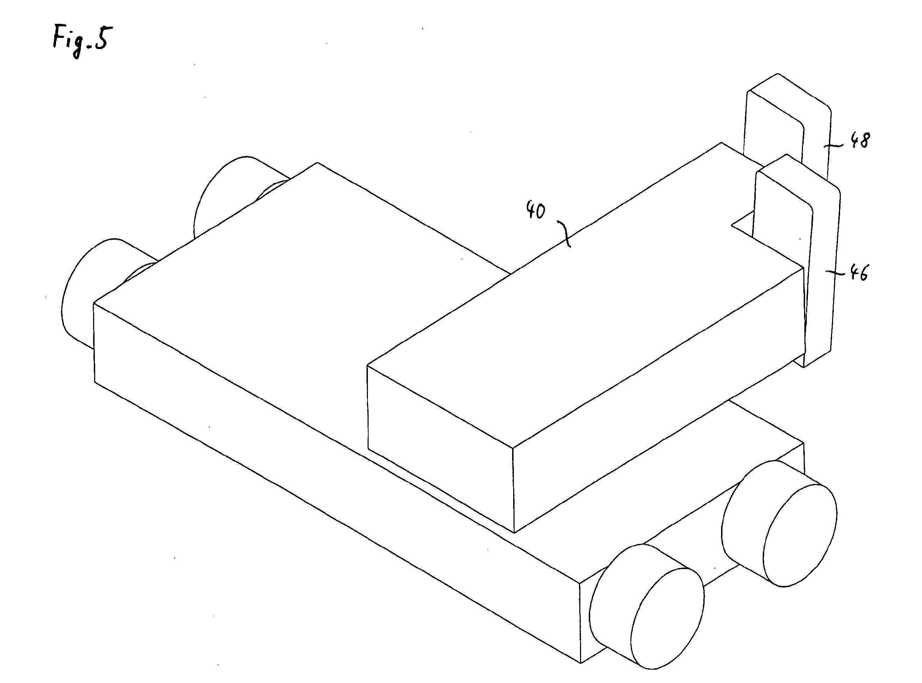

Der Transportwagen 30 weist eine Greifeinrichtung zum Erfassen und Bewegen einer Langgutkassette in Form eines um eine vertikale Drehachse 38 drehbaren Greifkopfs 40 auf. Der Greifkopf 40 ist zwischen einer in Fig. 2 und 4 dargestellten ersten Ziehstellung und einer in Fig. 3 und 5 dargestellten, um einen bestimmten Winkel, hier 180°, gegenüber der ersten Ziehstellung verdrehten zweiten Ziehstellung verschwenkbar.

Der Greifkopf 40 trägt in einem Abstand zu der Drehachse 38 ein erstes oder äußeres Greifelement 46 und in einem kleineren Abstand zu der Drehachse 38 ein zweites oder inneres Greifelement 48, so dass zwischen den Greifelementen 46, 48 ein Zwischenraum 50 mit Breite B, in Längsrichtung 22 gesehen, besteht.

Die Anordnung ist so getroffen, dass die Breite B des Zwischenraums 50 der Breite bzw. Dicke, in Längsrichtung 22 der Kassettenaufnahme 20 und somit auch in Längsrichtung eines jeweiligen Regalfachs des Regallagers gesehen, eines Kassettenmitnehmers 24 entspricht, mit dem jede Langgutkassette an ihren beiden gegenüberliegenden Enden versehen ist, oder etwas größer als diese Dicke ist, damit der Kassettenmitnehmer in der nachfolgend zu erläuternden weise bei hochgeschwenkten Greifelementen mit etwas Spiel zwischen diesen aufgenommen werden kann.

Denkbar ist alternativ auch ein Transportwagen mit einem schwenkbaren Greifkopf, an dem nur ein einziges hochschwenkbares Greifelement angeordnet ist, zum Zusammenwirken mit einem Kassettenmitnehmer, der eine U-förmige Aufnahme bildet.

Die Drehachse 38 des Greifkopfs 40 ist in dem dargestellten Ausführungsbeispiel nicht mittig bezüglich der Breite A des Transportwagens zwischen den Fahrrollen 34 angeordnet, sondern außermittig, damit die effektive Länge des Greifkopfs 40, d.h. der Abstand der Mitte des Zwischenraums 50 zwischen den Greifelementen 46, 48 von der Drehachse 38, möglichst groß ausgebildet werden kann, ohne dass die Greifelemente bei einer Drehbewegung um 180° an eine der seitlichen Fahrschienen anstoßen. Die Drehachse 38 befindet sich somit näher an einem Paar Fahrrollen 34 als an dem gegenüberliegenden Paar Fahrrollen 34, wobei das Abstandsverhältnis zwischen Drehachse 38 und den jeweiligen Fahrrollen beispielsweise im Bereich von 1 : 1 bis 4 : 1 liegen kann und im dargestellten Beispiel etwa 2 : 1 beträgt.

Die beiden Greifelemente 46, 48 sind unabhängig voneinander zwischen der abgesenkten Ruheposition (Fig. 2, 3) und der angehobenen Greifposition (Fig. 4, 5) bewegbar. Im dargestellten Ausführungsbeispiel ist vorgesehen, dass die Greifelemente in Form von Schwenkhebeln ausgeführt sind, die um eine horizontale erste Schwenkachse 52 bzw. eine zweite Schwenkachse 54 verschwenkbar sind. Im dargestellten Beispiel ist der gegenseitige Abstand der ersten und zweiten Schwenkachsen 52, 54 so gewählt, dass die entsprechenden Antriebe beabstandet voneinander innerhalb des Greifkopfs 40 untergebracht werden können, beispielsweise in Form von Servo- bzw. Schrittmotoren, die eine gesteuerte Schwenkbewegung ermöglichen. Alternativ ist eine konzentrische Anordnung der Schwenkachsen 52, 54 möglich, d.h. miteinander übereinstimmende Schwenkachsen.

Da es ersichtlich nur darauf ankommt, die Greifelemente anheben und absenken zu können, ist auch eine Linearführung in vertikaler oder schräg verlaufender Richtung möglich, so dass die Greifelemente durch eine Verlagerung entlang der Führung angehoben oder abgesenkt werden können.

Die dargestellte Schwenkausführung hat indes den Vorteil, dass bei relativ flacher Bauweise ein relativ großer vertikaler Bereich zwischen angehobener und abgesenkter Stellung abgedeckt werden kann.

Die Kassettenmitnehmer 24, die an beiden gegenüberliegenden Enden einer jeden Langgutkassette angeordnet sind, haben in an sich bekannter Weise die Form einer horizontalen Querstange mit rundem Querschnitt (s. Fig. 4). Der Durchmesser der Querstange ist etwas kleiner als die Breite B des Zwischenraums zwischen den Greifelementen.

Um zu vermeiden, dass der Transportwagen 30 beim Verfahren einer Langgutkassette aufgrund der außermittigen Anordnung des Greifkopfs 40 und der daraus resultierenden außermittigen Zugkraft in den Fahrschienen um eine vertikale Achse verkantet, sind zwei unterschiedlich zugfeste und unterschiedliche Belastungsdehnungen aufweisende Zugketten zur Bewegung des Transportwagens vorgesehen. In Fig. 2 ist eine erste Zugkette 60 und eine zweite Zugkette 62 angedeutet, wobei die zweite Zugkette 62 aufgrund ihres geringeren Abstands von den Greifelementen 46, 48 im Betrieb größere Zugkräfte aufnehmen muss und daher stärker ausgebildet ist als die erste Zugkette 60. Im dargestellten Beispiel beträgt das Abstandsverhältnis der Drehachse 38 von den Fahrrollen 34 wie erwähnt ca. 2 : 1, so dass ein ähnliches Kräfteverhältnis für die Zugketten 60, 62 zu erwarten ist und diese daher so ausgebildet sind, dass die zweite Zugkette 62 in etwa doppelt so stark wie die erste Zugkette 60 ausgebildet ist. Der Einfachheit halber kann vorgesehen sein, dass die erste Zugkette 60 einfach und die zweite Zugkette 62 doppelt ausgebildet ist.

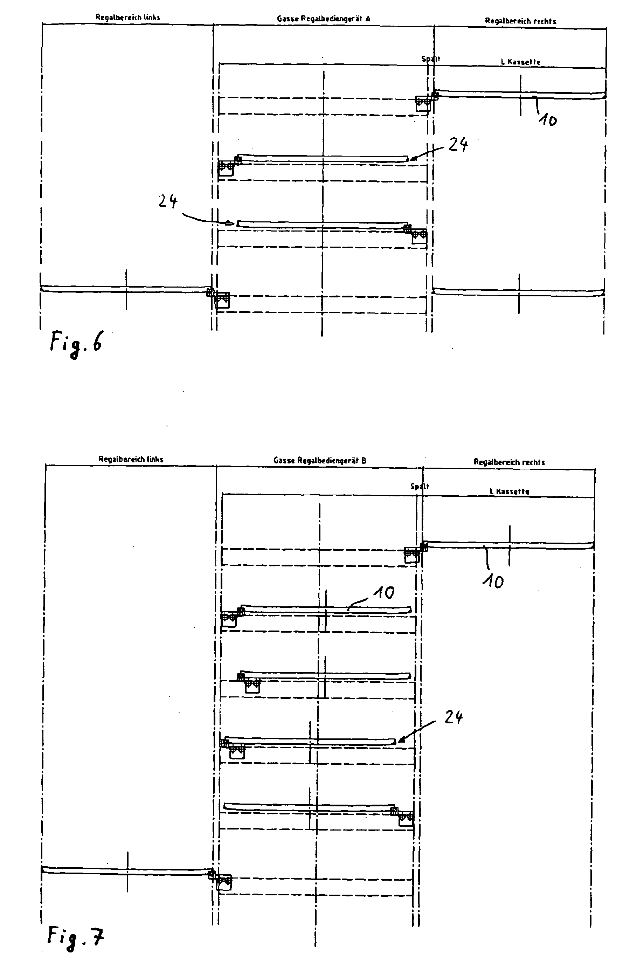

Fig. 6 erläutert in einer Abfolge von vier Darstellungen, von oben nach unten, die als zeitlicher Ablauf nacheinander zu verstehen sind, ein Verfahren zum Auslagern und ein Verfahren zum Umlagern einer Langgutkassette aus einem Regellager mit einem Regalbediengerät nach der Erfindung.

Die oberste Darstellung zeigt die Kassettenaufnahme 20 stirnseitig vor und in Höhe einer auszulagernden Kassette 10, wobei der Greifkopf 40 des Transportwagens 30 in eine zu der Kassette weisende Ziehstellung geschwenkt sind, in der die Greifelemente den Kassettenmitnehmer 24 erfassen können. Das weiter von der Drehachse des Greifkopfs entfernte erste Greifelement 46 wird hochgeschwenkt, nachdem der Transportwagen es hinter den Kassettenmitnehmer bewegt hat, und das zweite, nachdem der Transportwagen ein Stück zurückgefahren ist, bis das erste Greifelement gegen den Mitnehmer anliegt.

Daraufhin wird die Kassette in die Kassettenaufnahme gezogen, indem der Transportwagen an das gegenüberliegende (in Fig. 6 linke) Ende der Kassettenaufnahme gefahren wird (zweite Darstellung von oben). Die Kassette befindet sich nunmehr im wesentlichen in der Mitte der Kassettenaufnahme und kann entweder in ein Regalfach desselben Regalbereichs umgelagert oder nach Herausfahren des Regalbediengeräts auf eine außerhalb des Regallagers angeordnete Kassettenaufnahme ausgeschoben werden.

Wenn die Kassette in ein in dem gegenüberliegenden Regalbereich befindliches Regalfach umgelagert werden soll, werden die beiden in den unteren Darstellungen von Fig. 6 erläuterten Schritte ausgeführt. Hierzu wird zunächst der Transportwagen bei abgesenkten Greifelementen an das gegenüberliegende Ende der Kassettenaufnahme gefahren und der Greifkopf in die gegenüberliegende Ziehstellung gedreht. Zumindest das der Drehachse des Greifkopfs zunächstliegende zweite Greifelement 48 wird in die Greifposition angehoben, und der Transportwagen kann durch Zusammenwirken zwischen dem Greifelement und dem Kassettenmitnehmer die Kassette in ein gegenüberliegendes Regalfach ausschieben, nachdem das Regalbediengerät die Kassettenaufnahme gegebenenfalls an die benötigte Stelle gefahren hat.

Zu Ausführung eines in Fig. 6 erläuterten Umlagerungsvorgangs muss die Kassettenaufnahme eine der Breite der Regalgasse entsprechende Länge aufweisen, die der Länge einer Langgutkassette, d.h. dem gegenseitigen Abstand der jeweils endseitig angebrachten Kassettenmitnehmer 24, zuzüglich der doppelten Länge des Transportwagens, gemessen als Abstand etwa der Mitte des Zwischenraums zwischen den Greifelementen von der Drehachse der am weitesten davon entfernten Fahrrollen 34, entspricht.

Eine Verkleinerung der Gassenbreite und der Länge der Kassettenaufnahme des Regalbediengeräts und damit auch eine verbesserte Ausnutzung der Grundfläche des Regallagers, die sich insbesondere bei Anordnung zahlreicher Regalgassen bemerkbar macht, lässt sich mit dem erfindungsgemäßen Regalbediengerät dadurch erreichen, dass ein in Fig. 7 erläutertes Umlagerungsverfahren angewendet wird.

Die in den oberen beiden Darstellungen gezeigten Anfangs- und Zwischenzustände entsprechen denen aus Fig. 6, wobei die umzulagernde Kassette allerdings aufgrund der gegenüber Fig. 6 schmaleren Regalgasse nicht ganz bis in die Mitte der Kassettenaufnahme des Regalbediengeräts gezogen werden kann. Daher sind vor Ausführung der Schritte in den untersten beiden Darstellungen, die wiederum prinzipiell denen nach Fig. 6 entsprechen, die in der dritten und vierten Darstellung erläuterten Schritte auszuführen. Hierzu wird ausgehend von dem in der zweiten Darstellung von oben gezeigten Zustand der Greifkopf in eine entgegengesetzte Stellung verdreht und der Transportwagen soweit zurückgefahren, bis die Greifelemente bzw. zumindest das der Drehachse des Greifkopfs zunächstliegende Greifelement in Zusammenwirken mit dem Kassettenmitnehmer gebracht werden kann. Daraufhin wird die Kassette ganz ans entgegengesetzte (in Fig. 6 linke) Ende der Kassettenaufnahme 20 verfahren (vierte Darstellung von oben).

Der zwischengeordnete, bei einer schmalen Regelgasse erforderliche Umsetzvorgang kann alternativ in an sich bekannter Weise mit einer separaten Umsetzvorrichtung erfolgen.

In dieser Position kann der gegenüberliegende, in Fig. 7 rechts dargestellte Kassettenmitnehmer 24 von dem Greifkopf erfasst werden, was in Fig. 7 in der vorletzten Darstellung von oben gezeigt ist. Nachdem die Kassettenaufnahme 20 bzw. das Regalbediengerät gegebenenfalls an ein gewünschtes gegenüberliegendes Regalfach gefahren worden ist, kann nunmehr die Kassette in das Regalfach ausgeschoben werden (unterste Darstellung in Fig. 7).

Da bei den meisten Umlagerungsvorgängen das Regalbediengerät oder zumindest die Kassettenaufnahme 20 verfahren werden muss, fällt der in dem Verfahren nach Fig. 7 zusätzliche Schritt des Bewegens der Kassette zeitlich nicht oder nur kaum ins Gewicht, so dass das erläuterte Verfahren vorteilhaft ist, um eine geringere Breite von Regalgasse und Regalbediengerät zu realisieren.

### Bezugszeichenliste

- 2: linker Regalbereich
- 4: rechter Regalbereich
- 6: Regalstütze
- 8: Etage
- 10: Langgutkassette
- 12: Regalgasse
- 14: Regalbediengerät
- 16: Gassenlängsrichtung
- 18: Ständer
- 20: Kassettenaufnahme
- 22: Längsrichtung
- 24: Kassettenmitnehmer
- 30: Transportwagen
- 32: Drehachse
- 34: Fahrrolle
- 36: Fahrgestell
- 38: Drehachse
- 40: Greifkopf
- 46: erstes (äußeres) Greifelement
- 48: zweites (inneres) Greifelement
- 50: Zwischenraum
- 52: erste Schwenkachse
- 54: zweite Schwenkachse
- 60: erste Zugkette
- 62: zweite Zugkette

- A: Breite von 30
- B: Breite von 50

## Patentansprüche

1. Regalbediengerät (14) für Kassetten, insbesondere Langgutkassetten (10), mit mindestens einer horizontalen Kassettenaufnahme (20), die einen entlang einer horizontalen Führungsbahn mittels einer Antriebseinrichtung (60, 62) verfahrbaren Transportwagen (30) mit einer Greifeinrichtung (40, 46, 48) für jeweils mindestens eine Kassette (10) aufweist, wobei die Greifeinrichtung einen zwischen einer ersten Ziehstellung und einer zweiten Ziehstellung um eine vertikale Drehachse (38) drehbaren Greifkopf (40) aufweist, **dadurch gekennzeichnet** der Greifkopf zwei mit unterschiedlichem Abstand von der Drehachse (38) angeordnete Greifelemente (46, 48) trägt, die unabhängig voneinander zwischen einer abgesenkten Ruheposition und einer angehobenen Greifposition verlagerbar sind.

2. Regalbediengerät nach Anspruch 1, **dadurch gekennzeichnet, dass** mindestens ein Greifelement entlang einer vertikal oder schräg angeordneten Führung verlagerbar ist.

3. Regalbediengerät nach Anspruch 1, **dadurch gekennzeichnet, dass** mindestens ein Greifelement (46, 48) exzentrisch bezüglich einer horizontalen Schwenkachse (52, 54) gehalten und um diese verschwenkbar ist.

4. Vorrichtung nach Anspruch 3, **dadurch gekennzeichnet, dass** die Greifelemente (46, 48) um parallele Schwenkachsen (52, 54) verschwenkbar sind, die konzentrisch oder mit gegenseitigem Abstand angeordnet sein können.

5. Regalbediengerät nach Anspruch 3 oder 4, **dadurch gekennzeichnet, dass** jedes Greifelement (46, 48) aus der Ruheposition um einen bestimmten Schwenkwinkel in die Greifposition verschwenkbar ist.

6. Regalbediengerät nach Anspruch 5, **dadurch gekennzeichnet, dass** der Schwenkwinkel zwischen 30° und 120° beträgt.

7. Regalbediengerät nach einem der vorangehenden Ansprüche, **dadurch gekennzeichnet, dass** mindestens ein Greifelement mit einer Sollbruchstelle versehen ist.

8. Regalbediengerät nach einem der vorangehenden Ansprüche, **dadurch gekennzeichnet, dass** jedes Greifelement (46, 48) von einem Servo- oder Schrittmotor elektrisch, pneumatisch oder hydraulisch gesteuert angetrieben ist.

9. Regalbediengerät nach einem der vorangehenden Ansprüche, **dadurch gekennzeichnet, dass** der Transportwagen (30) auf zwei parallelen, im Querschnitt C-förmigen Fahrschienen verfahrbar ist.

10. Regalbediengerät nach einem der vorangehenden Ansprüche, **dadurch gekennzeichnet, dass** der Transportwagen (30) vier Fahrrollen (34) aufweist.

11. Regalbediengerät nach einem der vorangehenden Ansprüche, **dadurch gekennzeichnet, dass** die vertikale Drehachse (38) mittig bezüglich des Transportwagens (30) angeordnet ist.

12. Regalbediengerät nach einem der Ansprüche 1 bis 10, **dadurch gekennzeichnet, dass** die vertikale Drehachse (38) außermittig bezüglich des Transportwagens (30) angeordnet ist.

13. Regalbediengerät nach einem der vorangehenden Ansprüche, **dadurch gekennzeichnet, dass** die erste und die zweite Ziehstellung um 180° voneinander entfernt sind.

14. Regalbediengerät nach einem der vorangehenden Ansprüche, **dadurch gekennzeichnet, dass** der Transportwagen (30) durch zwei parallele beabstandete Zugketten (60, 62) verfahrbar ist.

15. Regalbediengerät nach Anspruch 12 und 14, **dadurch gekennzeichnet, dass** eine der Zugketten (62), die näher an der Drehachse (38) angeordnet ist als die andere (60), eine größere Zugfestigkeit und geringere Belastungsdehnung aufweist als die andere Zugkette (60).

16. Regallager für Kassetten, insbesondere Langgutkassetten mit einem Regalbediengerät (14) nach einem der vorangehenden Ansprüche, wobei das Regallager an aufrechten Regalstützen (6) in mehreren Etagen (8) in regelmäßigen Abständen Regalfächer mit Auflagen für die Langgutkassetten (10) enthält, das Regalbediengerät (14) stirnseitig horizontal und vertikal vor den Regalfächern verfahrbar ist und die Kassettenaufnahme (20) in Erstreckungsrichtung der Kassetten (10) gerichtet ist.

17. Verfahren zum Auslagern einer Kassette, insbesondere Langgutkassette aus einem Regallager mit einem Regalbediengerät (14) nach einem der Ansprüche 1 bis 15, mit den Schritten: Bewegen der Kassettenaufnahme (20) stirnseitig vor ein Regalfach mit einer auszulagernden Kassette (10), Drehen des Greifkopfs (40) in eine Ziehstellung, in der die Greifelemente (46, 48) der auszulagernden Kassette (10) zugekehrt sind, bei in Ruhestellung befindlichen Greifelementen, Verfahren des Transportwagens (30) an ein der Kassette (10) benachbartes Ende der Kassettenaufnahme (20), bis sich ein erstes Greifelement (46), das weiter von der Drehachse (38) entfernt ist als ein zweites Greifelement (48), hinter einem Kassettenmitnehmer (24) befindet, Bewegen des ersten Greifelements (46) in Greifposition, Zurückfahren des Transportwagens (30) und Ziehen der Kassette (10) in die Kassettenaufnahme (20) des Regalbediengeräts (14).

18. Verfahren nach Anspruch 17, **dadurch gekennzeichnet, dass** das zweite Greifelement (48) in Greifposition bewegt wird, nachdem das erste Greifelement (46) gegen den Kassettenmitnehmer (24) anliegt.

19. Verfahren zum Umlagern einer Kassette, insbesondere Langgutkassette (10) aus einem ersten Regalfach in ein zweites Regalfach eines Regallagers mit einem Regalbediengerät (14) nach einem der Ansprüche 1 bis 15, mit den Schritten: a) Bewegen der Kassettenaufnahme (20) stirnseitig vor das erste Kassettenfach, b) Drehen des Greifkopfs (40) in eine Ziehstellung, in der die Greifelemente (46, 48) der umzulagernden Kassette (10) zugekehrt sind, bei in Ruheposition befindlichen Greifelementen, c) Verfahren des Transportwagens (30) an ein der Kassette (10) benachbartes erstes Ende der Kassettenaufnahme (20), bis sich ein erstes Greifelement (46), das weiter von der Drehachse (38) entfernt ist als ein zweites Greifelement (48), hinter einem ersten Kassettenmitnehmer (24) befindet, d) Bewegen des ersten Greifelements (46) in Greifposition, e) Zurückfahren des Transportwagens (30) an ein entgegengesetztes Ende der Kassettenaufnahme (20) und Ziehen der Kassette (10) in die Kassettenaufnahme (20) des Regalbediengeräts (14), f) Bewegen des ersten Greifelements (46) in Ruheposition, Verschwenken des Greifkopfs (40) in eine entgegengesetzte Ziehstellung und Verfahren des Transportwagens (30) an das erste Ende der Kassettenaufnahme (20), g) Bewegen der Kassettenaufnahme stirnseitig vor das zweite Regalfach, h) Bewegen des zweiten Greifelements (48) in Greifposition, Verfahren des Transportwagens an das entgegengesetzte Ende der Kassettenaufnahme (20) und Schieben der Kassette (10) in das zweite Regalfach.

20. Verfahren nach Anspruch 19, **dadurch gekennzeichnet, dass** in Schritt f) die Kassette (10) mit in eine entgegengesetzte Ziehstellung gedrehtem Greifkopf (40) um eine Strecke weiter in Richtung des entgegengesetzten Endes der Kassettenaufnahme (20) gezogen wird, die etwa einem zweifachen Abstand der vertikalen Drehachse (38) des Greifkopfs (40) von der Mitte des Zwischenraums (50) der Greifelemente (46, 48) entspricht, und erst dann das erste Greifelement (46) in Ruheposition bewegt und der Transportwagen (30) an das erste Ende der Kassettenaufnahme (20) verfahren wird.

## Claims

1. Automated storage and retrieval system (14) for cassettes, in particular for long product cassettes (10), with at least one horizontal cassette holder (20) which has a transfer car (30) moveable along a horizontal guide rail by means of a drive device (60, 62), with a gripper device (40, 46, 48) for at least one cassette (10) in each case, wherein the gripper device has a gripper head (40) rotatable between a first pulling position and a second pulling position about a vertical axis of rotation (38), **characterised in that** the gripper head carries two gripper elements (46, 48) arranged at different distances from the axis of rotation (38), which are displaceable independently of each other between a lowered resting position and a raised gripping position.

2. Automated storage and retrieval system according to claim 1, **characterised in that** at least one gripper element is displaceable along a guide arranged vertically or obliquely.

3. Automated storage and retrieval system according to claim 1, **characterised in that** at least one gripper element (46, 48) is held eccentrically with respect to a horizontal swivelling axis (52, 54) and can be swivelled about this.

4. Device according to claim 3, **characterised in that** the gripper elements (46, 48) can be swivelled about parallel swivelling axes (52, 54) which can be arranged concentrically or at a mutual distance.

5. Automated storage and retrieval system according to claim 3 or 4, **characterised in that** each gripper element (46, 48) can be swivelled out of the resting position about a defined swivel angle into the gripping position

6. Automated storage and retrieval system according to claim 5, **characterised in that** the swivel angle is between 30° and 120°.

7. Automated storage and retrieval system according to one of the preceding claims, **characterised in that** at least one gripper element is provided with a predetermined breaking point.

8. Automated storage and retrieval system according to one of the preceding claims, **characterised in that** each gripper element (46, 48) is driven electrically, pneumatically or hydraulically in a controlled manner by a servomotor or a stepper motor.

9. Automated storage and retrieval system according to one of the preceding claims, **characterised in that** the transfer car (30) can be driven along two parallel running rails which are C-shaped in cross-section.

10. Automated storage and retrieval system according to one of the preceding claims, **characterised in that** the transfer car (30) has four drive rollers (34).

11. Automated storage and retrieval system according to one of the preceding claims, **characterised in that** the vertical axis of rotation (38) is arranged centrally with respect to the transfer car (30).

12. Automated storage and retrieval system according to one of claims 1 to 10, **characterised in that** the vertical axis of rotation (38) is arranged off-centre with respect to the transfer car (30).

13. Automated storage and retrieval system according to one of the preceding claims, **characterised in that** the first and the second pulling position are 180° offset from each other.

14. Automated storage and retrieval system according to one of the preceding claims, **characterised in that** the transfer car (30) can be displaced by two parallel pull chains (60, 62) at a distance from each other.

15. Automated storage and retrieval system according to claims 12 and 14, **characterised in that** one of the pull chains (62), which is arranged nearer to the axis of rotation (38) than the other (60), has a greater tensile strength and lesser extension under load than the other pull chain (60).

16. Rack storage for cassettes, in particular long product cassettes, with an automated storage and retrieval system (14) according to one of the preceding claims, wherein the rack storage contains rack bays on upright standards (6) on several levels (8) at regular intervals, with supports for the long product cassettes (10), the automated storage and retrieval system (14) is moveable on the face end horizontally and vertically in front of the rack bays, and the cassette holder (20) is aligned in the direction of extension of the cassettes (10).

17. Method for retrieving a cassette from storage, in particular long product cassettes, from a rack storage with an automated storage and retrieval system (14) according to one of claims 1 to 15, with the steps: moving the cassette holder (20) in front of the face end of a rack bay with a cassette (10) to be retrieved, rotating the gripper head (40) into a pulling position, in which the gripper elements (46, 48) are turned towards the cassette (10) to be retrieved, with the gripper elements in the resting position, moving the transfer car (30) to an end of the cassette holder (20) adjacent the cassette (10), until a first gripper element (46) which is further away from the axis of rotation (38) than a second gripper element (46), is behind a cassette carrier (24), moving the first gripper element (46) into the gripping position, retracting the transfer car (30) and pulling the cassette (10) into the cassette holder (20) of the automated storage and retrieval system (14).

18. Method according to claim 17, **characterised in that** the second gripper element (48) is moved into the gripping position once the first gripper element (46) abuts against the cassette carrier (24).

19. Method for transferring a cassette, in particular a long product cassette (10), out of a first rack bay into a second rack bay of a rack storage with an automated storage and retrieval system (14) according to one of claims 1 to 15, with the steps: a) moving the cassette holder (20) in front of the face end of the first cassette bay, b) rotating the gripper head (40) into a pulling position, in which the gripper elements (46, 48) are turned towards the cassette (10) which is to be transferred, with the gripper elements in the resting position, c) moving the transfer car (30) to a first end of the cassette holder (20) adjacent the cassette (10) until a first gripper element (46), which is further away from the axis of rotation (38) than a second gripper element (46), is behind a first cassette carrier (24), d) moving the first gripper element (46) into the gripping position, e) retracting the transfer car (30) to an opposite end of the cassette holder (20) and pulling the cassette (10) into the cassette holder (20) of the automated storage and retrieval system (14), f) moving the first gripper element (46) into the resting position, pivoting the gripper head (40) into an opposing pulling position and moving the transfer car (30) to the first end of the cassette holder (20), g) moving the cassette holder in front of the face end of the second rack bay, h) moving the second gripper element (48) into the gripping position, moving the transfer car to the opposite end of the cassette holder (20) and pushing the cassette (10) into the second rack bay.

20. Method according to claim 19, **characterised in that** in step f), the cassette (10), with the gripper head (40) turned in an opposite pulling position, is pulled towards the opposite end of the cassette holder (20) by a distance which corresponds to about twice the distance of the vertical axis of rotation (38) of the gripper head (40) from the centre of the intermediate space (50) of the gripper elements (46, 48), and only then is the first gripper element (46) moved into the resting position and the transfer car (30) is moved to the first end of the cassette holder (20).

## Revendications

1. Transstockeur (14) pour des cassettes, en particulier des cassettes à produit long (10), avec au moins un logement à cassette (20) horizontal, présentant un chariot de transport (30), déplaçable le long d'une piste de guidage horizontale au moyen d'un dispositif d'entraînement (60, 62), chariot de transport muni d'un dispositif de saisie (40, 46, 48) pour chaque fois au moins une cassette (10), le dispositif de saisie présentant une tête de saisie (40) susceptible de tourner autour d'un axe de rotation (38) vertical, entre une première position de traction et une deuxième position de traction, **caractérisé en ce que** la tête de saisie porte deux éléments de saisie (46, 48) disposés à une distance différente de l'axe de rotation (38), déplaçables indépendamment l'un de l'autre, entre une position de repos abaissée et une position de saisie relevée.

2. Transstockeur selon la revendication 1, **caractérisé en ce qu'**au moins un élément de saisie est déplaçable le long d'un guidage disposé verticalement ou obliquement.

3. Transstockeur selon la revendication 1, **caractérisé en ce qu'**au moins un élément de saisie (46, 48) est maintenu de manière excentrée par rapport à un axe de pivotement (52, 54) horizontal et est susceptible de pivoter autour de celui-ci.

4. Transstockeur selon la revendication 3, **caractérisé en ce que** les éléments de saisie (46, 48) sont susceptibles de pivoter autour d'axes de pivotement (52, 54) parallèles, pouvant être disposés concentriquement ou avec un espacement mutuel.

5. Transstockeur selon la revendication 3 ou 4, **caractérisé en ce que** chaque élément de saisie (46, 48) est susceptible de pivoter d'un angle de pivotement déterminé, de la position de repos à la position de saisie.

6. Transstockeur selon la revendication 5, **caractérisé en ce que** l'angle de pivotement est d'une valeur entre 30° et 120°.

7. Transstockeur selon l'une des revendications précédentes, **caractérisé en ce qu'**au moins un élément de saisie est muni d'un emplacement de rupture préférentielle.

8. Transstockeur selon l'une des revendications précédentes, **caractérisé en ce que** chaque élément de saisie (46, 48) est entraîné de manière commandé électriquement, pneumatiquement ou hydrauliquement, à l'aide d'un servomoteur ou d'un moteur pas à pas.

9. Transstockeur selon l'une des revendications précédentes, **caractérisé en ce que** le chariot de transport (30) est déplaçable sur deux rails de déplacement parallèles, à section transversale en forme de C.

10. Transstockeur selon l'une des revendications précédentes, **caractérisé en ce que** le chariot de transport (30) présente quatre galets de transport (34).

11. Transstockeur selon l'une des revendications précédentes, **caractérisé en ce que** l'axe de rotation (38) vertical est disposé de manière centrée par rapport au chariot de transport (30).

12. Transstockeur selon l'une des revendications 1 à 10, **caractérisé en ce que** l'axe de rotation (38) vertical est disposé de manière excentrée par rapport au chariot de transport (30).

13. Transstockeur selon l'une des revendications précédentes, **caractérisé en ce que** la première et la deuxième position de traction sont distantes l'une de l'autre de 180°.

14. Transstockeur selon l'une des revendications précédentes, **caractérisé en ce que** le chariot de transport (30) est déplaçable au moyen de deux chaînes de traction (60, 62) espacées et parallèles.

15. Transstockeur selon les revendications 12 et 14, **caractérisé en ce que** l'une des chaînes de traction (62), disposée plus près de l'axe de rotation (38) que l'autre (60), présente une résistance à la traction plus élevée, et un allongement sous charge plus faible, que l'autre chaîne de traction (60).

16. Stockage sur rayonnages pour des cassettes, en particulier des cassettes à produit long, avec un transstockeur (14) selon l'une des revendications précédentes, le stockage sur rayonnages contenant, sur des appuis de rayonnages (6) verticaux, en plusieurs étages (8), selon des espacements réguliers, des compartiments de rayonnage avec des reposoirs pour les cassettes à produit long (10), le transstockeur (14) étant déplaçable côté frontal, horizontalement et verticalement devant les compartiments de rayonnage et le logement à cassette (20) étant tourné dans la direction d'étendue des cassettes (10).

17. Procédé pour désentreposer une cassette, en particulier une cassette à produit long, d'un stockage sur rayonnages avec un transstockeur (14) selon l'une des revendications 1 à 15, comprenant les étapes consistant à :
déplacer le logement à cassette (20) côté frontal, devant un compartiment de rayonnage, avec une cassette (10) à désentreposer, faire pivoter la tête de saisie (40) pour la passer en une position de traction, dans laquelle les éléments de saisie (46, 48) sont tournés vers la cassette (10) à désentreposer, les éléments de saisie se trouvant alors en position de repos, déplacer le chariot de transport (30) à une extrémité, voisine de la cassette (10), du logement à cassette (20), jusqu'à ce qu'un premier élément de saisie (46), plus éloigné de l'axe de rotation (38) qu'un deuxième élément de saisie (48), se trouve derrière un organe d'entraînement de cassette (24),
déplacer le premier élément de saisie (46) en position de saisie, ramener le chariot de transport (30) et tirer la cassette (10) dans le logement à cassette (20) du transstockeur (14).

18. Procédé selon la revendication 17, **caractérisé en ce que** le deuxième élément de saisie (48) est déplacé en position de saisie après que le premier élément de saisie (46) soit mis en appui contre l'organe d'entraînement de cassette (24).

19. Procédé pour transposer une cassette, en particulier une cassette à produit long (10), d'un premier compartiment de rayonnage en un deuxième compartiment de rayonnage d'un stockage sur rayonnages, avec un transstockeur (14) selon l'une des revendications 1 à 15, comprenant les étapes consistant à : a) déplacer le logement à cassette (20) côté frontal, devant le premier compartiment à cassette, b) faire pivoter la tête de saisie (40) pour la passer en une position de traction, dans laquelle les éléments de saisie (46, 48) sont tournés vers la cassette (10) à transposer, les éléments de saisie se trouvant alors en position de repos, c) déplacer le chariot de transport (30) à une extrémité, voisine de la cassette (10), du logement à
cassette (20), jusqu'à ce qu'un premier élément de saisie (46), plus éloigné de l'axe de rotation (38) qu'un deuxième élément de saisie (48), se trouve derrière un organe d'entraînement de cassette (24), d) déplacer le premier élément de saisie (46) en position de saisie, e) ramener le chariot de transport (30) à une extrémité opposée du logement à cassette (20) et tirer la cassette (10) dans le logement à cassette (20) du transstockeur (14), f) déplacer le premier élément de saisie (46) en position de repos, faire pivoter la tête de saisie (40) en une position de saisie opposée et déplacer le chariot de transport (30) à la première extrémité du logement à cassette (20), g) déplacer le logement à cassette côté frontal devant le deuxième compartiment à assette, h) déplacer le deuxième élément de saisie (48) en position de saisie, déplacer le chariot de transport à l'extrémité opposée du logement à cassette (20) et pousser la cassette (10) dans le deuxième compartiment de rayonnage.

20. Procédé selon la revendication 19, **caractérisé en ce que**, à l'étape f), avec une tête de saisie (40) tournée en une position de traction opposée, il est parcouru une distance supplémentaire en direction de l'extrémité opposée du logement à cassette (20), correspondant à peu près à un double de l'espacement entre l'axe de rotation (38) vertical de la tête de saisie (40) et le centre de l'espace intermédiaire (50) des éléments de saisie (46, 48) et, ensuite, le premier élément de saisie (46) est déplacé à la position de repos, et le chariot de transport (30) est déplacé à la première extrémité du logement à cassette (20) .
